# EUROPEAN PATENT APPLICATION

(11) **EP 1 349 385 A2**
(43) Date of publication of application: **01.10.2003**
(21) Application number: 03006781.3
(22) Date of filing: 26.03.2003
(51) Int. Cl.: H04N 5/44

(54) **Image data processing circuit in receiver**

(30) Priority: 29.03.2002 JP 2002094071
(71) Applicant: Pioneer Corporation, Meguro-ku, Tokyo (JP)
(72) Inventor: Shibata, Koji, Pioneer Corporation Kawagoe Works, Kawagoe-shi, Saitama (JP); Tokoi, Akinori, Pioneer Corporation Kawagoe Works, Kawagoe-shi, Saitama (JP)
(74) Representative: Klingseisen, Franz, Dipl.-Ing.

(57) **Abstract**

An image data processing circuit reduces the visual unnatural impression given to a viewer even when a received image data time series is missed. An image data output provided by mixing a static image reading mode and a dynamic image reading mode is generated by freely adjusting the value of an image data address read from an image data memory once accumulating the received image data time series and reading timing at a receiving error occurrence time and its restoring time.

## Description

### BACKGROUND OF THE INVENTION

### 1. Field of the Invention

The present invention relates to an image data processing circuit for processing a received image data time series in a digital broadcast receiver.

### 2. Description of Related Art

A service using a ground wave digital broadcast such as so-called ISDB-T (Integrated Services Digital Broadcasting-Terrestrial) for transmitting image and voice by a digital signal is widespread in recent years. A mobile receiver mounted on a mobile vehicle such as a motor vehicle is widely utilized as a receiver of such a digital broadcast as well as an immobile receiver for indoor use. However, in the case of the receiver for a mobile vehicle, for example, the receiving state of a radio wave changes greatly as the vehicle travels. Therefore, there is a possibility that receiving data is missed frequently by degrading of the receiving state. Particularly, when the receiving data is image data, the missing of receiving data is immediately recognized visually. Therefore, in many cases the missing of data gives an unnatural impression to the user.

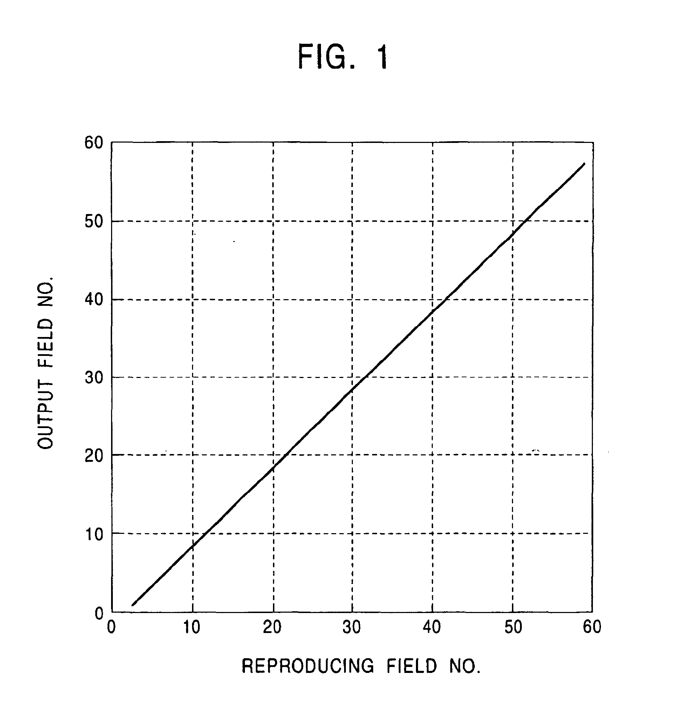

In a conventional receiver, as shown in Fig. 1, a reception processing section is constructed such that reproduced image data is continuously outputted to an image processing section of a video encoder, etc. as long as the reproduction processing of the received image data can be performed. In Fig. 1, the processing is performed while the image data of one field are stored into a buffer memory. Accordingly, when the image data of a tenth field shown in real time on the axis of abscissa are reproduced, the image data of a ninth field shown on the axis of ordinate is outputted to an image processing section.

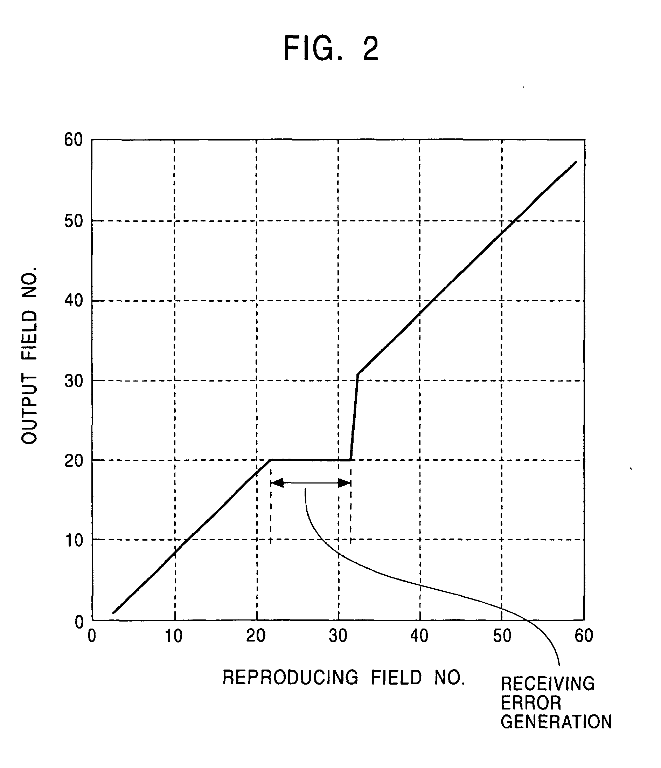

Therefore, when the received image data cannot be reproduced upon occurrence of a receiving error in the conventional receiver, the processing is performed as shown in Fig. 2. Namely, the image data of a field stored just before the receiving error occurs, is held in the reception processing section. The image data of this field is continuously outputted to the image processing section until the receiving error is restored and new received image data is reproduced.

This will be more concretely explained referring to Fig. 2. First, it is supposed that a receiving error occurs during the reproduction of the image data of a twenty-first field. As a result of this receiving error, the image data of a twentieth field stored to the buffer memory of the reception processing section just before the generation of the receiving error, is continuously outputted to the image processing section. The consecutive output of the image data from the reception processing section to the image processing section is restarted from the image data of a thirty-first field reproduced just after the receiving error is restored.

In this case, the image data supplied to the image processing section become a still image output using the image data of the twentieth field between the twenty-first field and the thirtieth field of the image data shown in real time on the axis of abscissa of Fig. 2. Therefore, there is a disadvantage that a unnatural impression is visually given to a user.

There also is a system in which a so-called "blue back" image is output instead of the still image during the period of receiving error. However, this type of system was not sufficient to reduce the visual unnatural impression given to the user.

### OBJECT AND SUMMARY OF THE INVENTION

The present invention has been made to solve such a problem, and an object of the present invention is to provide an image data processing circuit for reducing the visual unnatural impression of the user caused by missing the received image data in the receiver.

According to the present invention, an image data processing circuit in a receiver includes an image data memory; a data writing means for sequentially writing received image data to the image data memory; a data reading means for reading the image data from the memory on the basis of a reading address; and an error occurrence signal generating means for generating an error occurrence signal for a predetermined period by detecting a receiving error, a wherein the data reading means selectively executes a static image reading mode for reading the image data while the reading address is fixed for a short time within a period where the error occurrence signal is produced, and a dynamic image reading mode for reading the image data while the reading address is sequentially changed in an order of writing of the image data.

### BRIEF DESCRIPTION OF THE DRAWINGS

Fig. 1 is an explanatory view showing a situation in which a reproduced image data time series is outputted;
Fig. 2 is an explanatory view showing a situation when a receiving error is caused in the conventional receiver;
Fig. 3 is a block diagram showing an embodiment of a receiver having an image data processing circuit in the present invention;
Fig. 4 is a block diagram showing an embodiment of the image data processing circuit in the present invention;
Fig. 5 is a block diagram showing an example of the error signal generating circuit 21 shown in Fig. 4;
Fig. 6 is a block diagram showing a general constructional concept of the image data processing circuit in the present invention;
Fig. 7 is an explanatory view showing a processing operation of the image data processing circuit shown in Fig. 4 when the receiving error occurs; and
Fig. 8 is a flow chart showing the outline of a processing subroutine program in the image data processing circuit shown in Fig. 4 when the receiving error occurs.

### DETAILED DESCRIPTION OF THE EMBODIMENTS

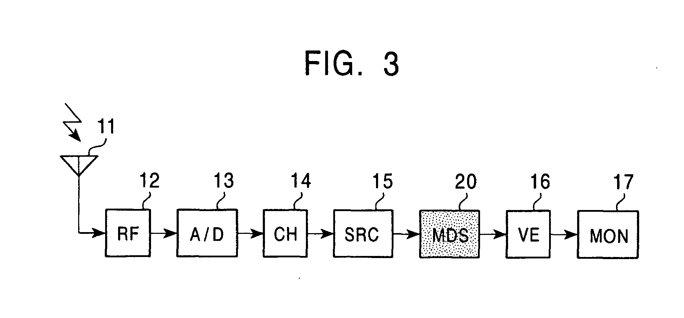

The block diagram of Fig. 3 shows the construction of a receiver using a received image data processing circuit in the present invention.

In the following explanation of the specification, a processing operation system in the present invention is called a motion damper system in connection with a processing procedure with respect to image data of this processing operation. The received image data processing circuit in the present invention is simply called an "MDS component" or an "MDS circuit".

It is supposed that the receiver shown in Fig. 3 is a receiver for a mobile for the ISDB-T broadcast. This receiver is constituted mainly of an antenna 11, a high frequency processing section 12, an analog/digital converter 13, a channel decoder section 14, a source decoder 15, a video encoder 16, a monitor 17, and an MDS section 20 as an embodiment of the present invention. The circuits of this diagram except for the MDS section 20 are constituted by corresponding circuits of a general digital broadcast receiver. Namely, tuning selection processing for selecting a predetermined desirable frequency and frequency conversion processing are performed by the high frequency processing section 12 with respect to a digital broadcast radio wave received by the antenna 11. Thereafter, this radio wave is converted to a digital signal by the analog/digital converter 13. With respect to this digital signal, decoding processing as an image data time series is performed by the channel decoder 14. In the source decoder 15, extension processing of compressed image data is performed. Thereafter, such data is converted to an analog video signal in the video encoder 16, and are supplied to the monitor 17.

In Fig. 3, the construction near the MDS section 20 is such that the MDS section 20 is arranged between the source decoder 15 and the video encoder 16. However, the embodiment of the present invention is not limited to such an arrangement. For example, the MDS section 20 may be arranged between the channel decoder 14 and the source decoder 15. In the former case, the interface of the MDS section 20 and a constructional part of the receiver at each of stages before and after the MDS section 20 is formed by a digital video signal of ITU656 standard, etc. In the latter case, this interface is formed by a so-called transport stream (TS) signal. Further, the present invention may also be arranged such that the function of the MDS section 20 is incorporated as a part of the function performed by the parts of the receiver shown in Fig. 3.

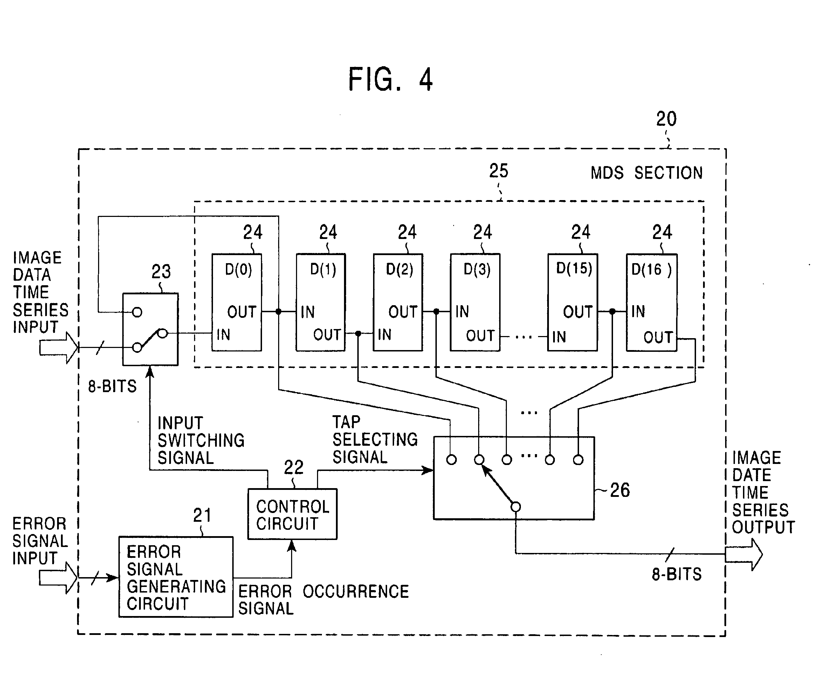

The construction of the MDS section 20 will next be explained with reference to the block diagram shown in Fig. 4.

As shown in this figure, the MDS section 20 is mainly constructed by an error signal generating circuit 21, a control circuit 22, an input switching circuit 23, a register circuit 24, a first-in first-out type buffer memory 25 and a tap selecting circuit 26.

In the case of this embodiment, the image data time series in the MDS section 20 is inputted and outputted by the interface of a digital video signal in accordance with the ITU656 standard, and concretely becomes a parallel data time series of an 8-bit width sampled at about 27 MHz. Only a portion for processing one bit among such parallel data is shown in Fig. 4 showing the construction of the embodiment. For processing the remaining bits, portions each having the same construction as the signal path from the switching circuit 23 to the switching circuit 26 are provided. It is needless to mention that the interface of the present invention is not limited to the interface of such a standard.

The error signal input shown in Fig. 4 is error detecting signals of all kinds detected by each constructional part of the receiver arranged at the former stage of the MDS section 20. Accordingly, for example, such an error signal input includes the error detecting signals of various kinds such as a carrier synchronous signal with respect to a digital demodulating signal, a packet error signal, or a signal with respect to an error rate of received data.

The function of each constructional circuit within the MDS section 20 shown in Fig. 4 will next be explained.

The error signal generating circuit 21 is a circuit for generating a predetermined error occurrence signal on the basis of an error signal input from each constructional portion arranged at the former stage of the MDS section 20. As mentioned above, various signals showing the occurrence of the receiving error in the receiver are supposed as the error signal input irrespective of an analog signal and a digital signal. Namely, any error signal input may be used if the error signal input is a signal having correlation to a state for giving an obstacle to the output of an image signal caused within the receiver outside the MDS section 20. Accordingly, processing circuits of various kinds such as a waveform shaping circuit, an analog/digital converting circuit, etc. are arranged within the error signal generating circuit 21 so as to cope with the error signal inputs of various kinds.

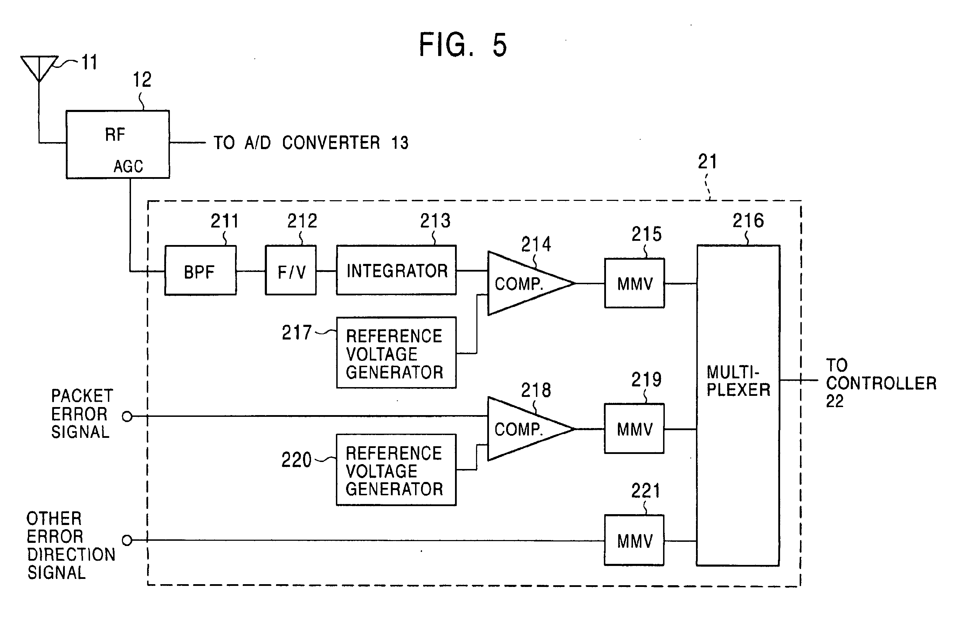

For example, if the correlation for giving the obstacle to the image is high when a specific frequency component is superposed on an AGC voltage (analog signal) treated in a tuner circuit of the RF component 12, such a signal may be also added as one of the error signals as illustrated in Fig. 5.

Fig. 5 shows an example of error signal generating circuit 21 that includes a part which executes an error detection using an AGC control signal generated in the RF section 12.

As shown in Fig. 5, an AGC control signal generated in the RF section is supplied to a band-pass filter in which a frequency component superimposed on the AGC voltage is extracted. The frequency component extracted by the band-pass filter 211 is supplied to an F/V converter 212 which in turn converts the frequency component to a voltage signal. The voltage signal is then supplied to an integrator 213 in which instantaneous level change of the voltage signal is removed. An output signal of the integrator 213 is supplied to a comparator 217 in which the output signal of the integrator is compared with a reference signal from a reference signal generator 217. The comparator 214 produces a logical high level signal when the output signal of the integrator 213 exceeds the level of the reference signal from the reference signal generator 217. The output signal of the comparator 214 is supplied to a monostable multivibrator (MMV) 215 as a trigger signal. Upon receipt of the trigger signal from the comparator 214, the MMV 215 produces an output pulse signal of a predetermined pulse width, and supplies it to a multiplexer 216.

The error signal generating circuit 21 shown in Fig. 5 has a configuration including a signal path for receiving a packet error signal which is generated when a packet error exists in an output signal of a digital decoder in the receiver receiving a digital data signal. The packet error signal is received at a comparator 218 in which the packet error signal is compared with a second reference voltage produced by a reference voltage generator 220. The comparator 218 produces a logical high level signal when the level of the packet error signal exceeds the level of the second reference voltage, and supplies the output signal to the monostable multivibrator 219 as a trigger signal. The error signal generating circuit 21 shown in Fig. 5 further includes a monostable multivibrator 221 which receives, as a trigger signal thereof, another error detection signal such as an error detection signal based on an error rate of the received data.

The output pulses of the monostable multivibrators 215, 219, 221 are combined with each other at the multiplexer which, for example, is constituted by an OR circuit, and an out put signal of the multiplexer 216 is supplied to the control circuit 22 as an output signal of the error signal generating circuit 21.

Furthermore, there are signals discretely generated in time among the supposed error signals of various kinds, and the generation of an error state and the generation of the obstacle with respect to the image are not necessarily conformed to each other. Therefore, for the error signal of that kind, the error signal generating circuit 21 performs waveform shaping processing so as to convert such an error signal input to a pulse waveform in a duty ratio corresponding to the subsequent processing. The error occurrence signal generated in this way is supplied from the error signal generating circuit 21 to the control circuit 22.

The control circuit 22 is mainly constructed by a microcomputer, a memory circuit such as a ROM (Read Only Memory), or a RAM (Random Access Memory), and a peripheral circuit of each of these elements. The processing procedure of the motion damper system in the present invention is stored as one of subroutine programs within the above ROM. Such a subroutine program is executed in synchronization with a clock within the above microcomputer. An input switching signal is outputted from the control circuit 22 to the input switching circuit 23, and a tap selecting signal is outputted from the control circuit 22 to the tap selecting circuit 26.

The input switching circuit 23 is a circuit for switching data inputted to the first-in first-out type buffer memory 25 described later in accordance with the input switching signal from the control circuit 22, and is constituted by a normal logic gate circuit.

The register circuit 24 is a latch circuit of so-called one bit for transmitting a logic level on the input side (the "IN" side shown in Fig. 4), i.e., input data to the output side (the "OUT" side shown in Fig. 4) in synchronization with an applied clock pulse which is not illustrated.

The first-in first-out type buffer memory (hereinafter simply called "buffer memory") 25 is a buffer memory of the first-in first-out type constructed by cascade-connecting the above register circuit 24. Namely, data applied to a register D(0) located on the leftmost side of the buffer memory 25 are sequentially sent to registers D(1), D(2), - on the right-hand side every time the clock pulse is advanced by one. In this embodiment, the period of such a clock pulse is set to the time of one field of the image data. Therefore, the image data of one field are shifted from leftward to rightward within the buffer memory 25 at any time every time of one field.

The output terminal "OUT" of the register circuit 24 at each stage constituting the buffer memory 25 is connected to the input terminal "IN" of the register circuit 24 at the next stage, and is pulled out to the exterior of the buffer memory 25. In the following explanation, such an output terminal of each register circuit 24 pulled out to the exterior is called a "tap". For example, the tap of the output of the register D(2) is called "tap D(2)". In this embodiment, the buffer memory 25 is constituted by the register circuits 24 at 17 stages of registers D(0) to D(16). Therefore, 17 taps constructed by taps D(0) to D(16) are also arranged with respect to the taps pulled out of the buffer memory 25. These taps are connected to the tap selecting circuit 26. The image data within the buffer memory 25 are shifted in synchronization with the time of one field of the image. Therefore, the image data of continuous 17 fields appear in the above taps at any time.

The period of a shift clock pulse shown in the circuit of Fig. 4 and the stage number of the register circuits 24 constituting the buffer memory 25 are merely one embodiment. Accordingly, the execution of the present invention is naturally not limited to such an example.

The tap selecting circuit 26 is a switch circuit for selecting one of the taps D(0) to D(16) outputted from the buffer memory 25 on the basis of a tap selecting signal supplied from the control circuit 22. Data fetched by relaying a tap position selected by the tap selecting circuit 26 become the output of an image data time series from the MDS section 20. For example, the tap selecting circuit 26 may be also constructed by an analog switch circuit constructed by a semiconductor element such as a FET, or a transistor switched by the tap selecting signal corresponding to each of the taps. Further, the tap selecting circuit 26 may be also constructed by a logic gate circuit for selecting the gate of each tap by decoding the tap selecting signal constructed by a predetermined selecting code.

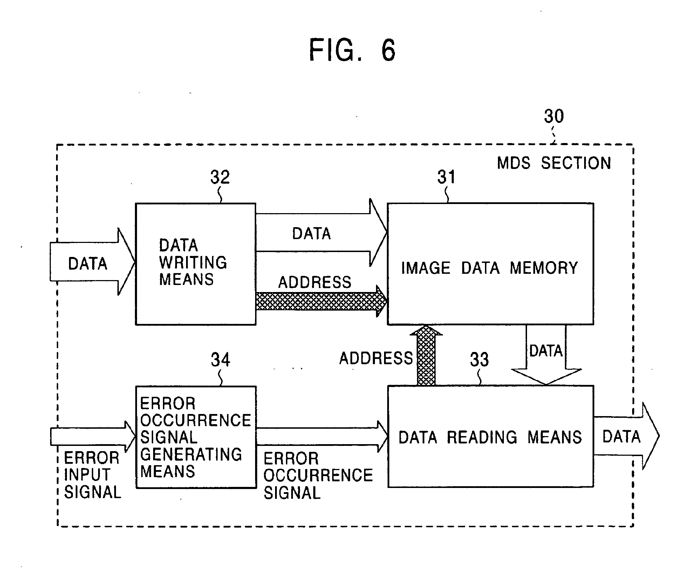

In this embodiment, the MDS section 20 is constructed by using the buffer memory of the first-in first-out type as an example, but the execution of the present invention is not limited to such a construction. For example, as shown in Fig. 6, an MDS component 30 may be constructed by arranging an image data memory 31, a data writing means 32 for writing image data to a predetermined address of this memory 31, a data reading means 33 for reading the image data from the predetermined address of this memory 31, and an error occurrence signal generating means 34 for detecting an error in a receiver and generating an error occurrence signal. In this case, the data reading means 33 generates a reading address by using a predetermined algorithm in accordance with the error occurrence signal, and reads predetermined desirable image data from the image data memory 31.

The processing operation of the motion damper system in the present invention will next be explained.

According to the present invention, an after-image effect in vision is utilized, and the image data time series before and after the missing of the image data can be smoothly connected by processing the missed image data time series by using a predetermined algorithm described later while the static image output and the dynamic image output are mixed. Such a principle is applied in the features of the present invention, and the present invention provides an image output having no unnatural impression in vision with respect to a user.

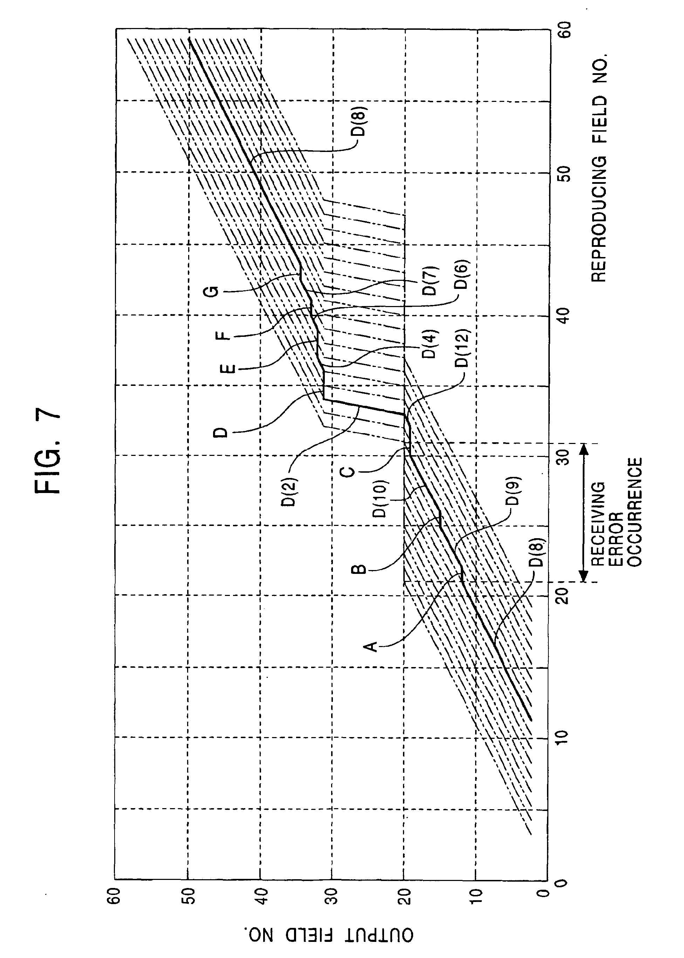

The operation processing in the present invention will next be explained with reference to the block diagram of the MDS section 20 shown in Fig. 4, and the explanatory view of the operation of the MDS section 20 shown in Fig. 7. Fig. 7 shows the relationship of the field number of the image data as an input and the field number of the image data as an output with respect to each of the registers D(0) to D(16) constituting the buffer memory 25. A thick line portion shown in Fig. 7 shows a tap position D(n) selected by the tap selecting circuit 26 at a pertinent time point, i.e., a register D(n) in which the image data is fetched.

First, when no receiving error is caused in the receiver, the control circuit 22 supplies an input switching signal to the input switching circuit 23 with input data of the buffer memory 25 as an image data time series input. The control circuit 22 also supplies a tap selecting signal for selecting the tap position (hereinafter such a tap position is called a "middle point tap") of a tap D(8) to the tap selecting circuit 26.

Accordingly, the output of the register D(8) is fetched as an output image data time series of the MDS section 20. A portion showing this situation becomes the portion shown by the thick line of D(8) before the occurrence of the receiving error in Fig. 7. Namely, in a normal state before the occurrence of the receiving error, as shown in Fig. 7, the image data time series having a delay of 9 fields with respect to the reproduced received image data is outputted from the MDS section 20.

Here, it is supposed that a certain receiving error occurs during the reproduction of a 21st field of the received image data shown in real time on the axis of abscissa of Fig. 7. A receiver's element that detects such a receiving error outputs a predetermined error signal to the MDS section 20. The error signal generating circuit 21 detecting this error generates an error occurrence signal on the basis of a predetermined procedure, and supplies this error occurrence signal to the control circuit 22.

When the control circuit 22 recognizes this error occurrence signal, the control circuit 22 immediately generates an input switching signal for switching a signal inputted to the buffer memory 25, and supplies the input switching signal to the input switching circuit 23.

The input switching circuit 23 receiving such an input switching signal switches the signal to be inputted to the buffer memory 25 from the image data time series input supplied from the stage before the MDS section 20 to the output of a register D(0) arranged at the first stage of the buffer memory 25. Thus, it is possible to prevent the image data time series causing the error from being written to the buffer memory 25. After this, while the error state is continued, the image data just before the occurrence of error, i.e., the output of the register D(0) is sequentially written to each register within the buffer memory 25 every time the register circuit 24 is shifted.

On the other hand, the control circuit 22 supplies the above input switching signal to the input switching circuit 23, and simultaneously generates a tap selecting signal for selecting a predetermined tap position, and supplies the tap selecting signal to the tap selecting circuit 26. In the case of this embodiment, just after the occurrence of error the tap selecting signal for selecting a tap D(9) is first supplied to the tap selecting circuit 26.

The tap D(9) is a tap next to a middle point tap selected until just before the occurrence of the error, i.e., a tap in which the time series data located before by one field are outputted. Therefore, one field just after the tap switching from the middle point tap to the tap D(9) is performed, becomes image data of the same field as that prior to the switching. Namely, as shown by a thick line portion A just after the generation of the receiving error in Fig. 7, one field of the image data outputted from the MDS section 20 just after the tap is changed from D(8) to D(9), becomes a static image output. In this case, since a period for providing the static image output is only one field, the fear of giving a visual unnatural impression to a user by such a static image output is very small when an after-image effect in the vision of a human being is considered.

Thereafter, the control circuit 22 monitors the existence of the error occurrence signal every time data in the buffer memory 25 are shifted. The control circuit 22 also counts the number of data shifts performed during the error occurrence. The control circuit 22 further generates the next tap selecting signal in predetermined timing, and supplies this next tap selecting signal to the tap selecting circuit 26. In this embodiment, the control circuit 22 supplies the tap selecting signal for selecting a tap D(10) to the tap selecting circuit 26 in timing in which a fourth data shift is performed after the first tap selection is switched.

Thus, the tap selecting circuit 26 switches the selected tap position from the tap D(9) to the tap D(10). Similar to the previous tap switching time, the difference in delay time between both these adjacent taps corresponds to one field of the image data. Accordingly, as shown by a thick line portion B of Fig. 7, similar to the first switching time, the static image output of one field is also caused at the second tap switching time. However, such a static image is outputted for a very short time. As shown in Fig. 7, the output of a dynamic image from the tap D(10) is restarted from the next field. Therefore, similar to the previous tap switching time, no visual unnatural impression is given to the user.

Thereafter, the control circuit 22 monitors the existence of the error occurrence signal every time data in the buffer memory 25 are shifted. The control circuit 22 also counts the number of data shifts performed during the error occurrence. When a fifth data shift is performed after the second switching of the tap selecting position, the control circuit 22 generates a tap selecting signal for moving the tap selecting position to a tap D(12), and supplies this tap selecting signal to the tap selecting circuit 26. Thus, the tap selecting circuit 26 switches the tap selecting position from the tap D(10) to the tap D(12) via a tap D(11).

The tap D(12) corresponds to a tap position in which the image data located before by two fields with respect to the tap D(10) are outputted. Therefore, at this third tap switching time, as shown by a thick line portion C of Fig. 7, a static image of two fields is once outputted from the MDS section 20. Accordingly, with respect to the third tap switching, it is also necessary to consider an influence exerted on the vision of the user by such a continuous static image output.

However, in this embodiment, after the error occurrence, the static image output of one field provided by nipping a dynamic image output every several fields is already twice performed in A and B of Fig. 7. Therefore, with respect to the user continuously looking and listening the image output in this embodiment from before the error occurrence, the unnatural impression visually sensed by the static image output of the two fields at the third tap switching time is very small. This is clear from the visual custom property of a human being in which the viewer immediately notices this sense when the static image output for a long time is suddenly inserted during the continuation of the dynamic image output, but the viewer does not immediately notice this sense when the time of the inserted static image output is gradually increased during the continuation of the dynamic image output.

The image processing in the present invention is called the motion damper system because a proportional increase in the continuation time of the static image output inserted during the dynamic image output with the passage of time is just equivalent to a gradual reduction in the movement within the image data.

Setting values such as the field number of the static image output shown in the explanation of the above motion damper treatment process, the field number of the dynamic image output as an interval, the tap selecting position or the selection switching number, are merely one example. Accordingly, the execution of the present invention is naturally not limited to such an example. Namely, in this embodiment, these setting values may be determined along an algorithm set so as to minimize the visual unnatural impression given to the user in conformity with the characteristics of the used receiver and the nature of the received image.

On the other hand, in this embodiment, it is supposed that the receiving error state is restored in a thirty-first field shown in real time on the axis of abscissa of Fig. 7. Thus, the error input inputted to the error signal generating circuit 21 of the MDS section 20 becomes extinct. Further, the error occurrence signal supplied from the error signal generating circuit 21 to the control circuit 22 also becomes extinct. When the control circuit 22 detects the extinction of the error occurrence signal, an input switching signal for giving instructions for switching the input signal to the buffer memory 25 from the output of the register (DO) to the image data time series input is outputted from the control circuit 22 to the input switching circuit 23. Thus, the received and reproduced image data time series is again fetched into the buffer memory 25.

On the other hand, no control circuit 22 instantly generates a new tap selecting signal and supplies this new tap selecting signal to the tap selecting circuit 26 even when the control circuit 22 detects the extinction of the error occurrence signal. Namely, the position of tap D(12) just before the restoration of the receiving error is held in the tap selecting circuit 26. The image data time series from the register D(12) is outputted as image data from the MDS section 20. In this case, the control circuit 22 sets a processing judgment flag as a "post error flag" in a condition in which the tap position selected at present is dislocated from the middle point tap (tap D(8)) in synchronization with the extinction of the error occurrence signal.

Thereafter, the control circuit 22 next counts the number of data shifts by monitoring the state of the post error flag every time the data shift in the buffer memory 25 is performed. When a third data shift is performed after the tap selecting position is switched at the third time, i.e., when first one field of the dynamic image output is outputted from the register D(12), the control circuit 22 gives the fourth-switching instructions of the tap selecting position to the tap selecting circuit 26.

In the fourth switching of the tap selecting position, the control circuit 22 supplies a tap selecting signal for selecting a tap D(2) to the tap selecting circuit 26. Thus, the reproduced image data time series after the error restoration reaching until the register D(2) within the buffer memory 25 is outputted as the image data from the MDS section 20 for the first time.

Thus, in this embodiment, the reproduced image data after the error restoration are not immediately outputted after the restoration of the receiving error, but the image data time series accumulated so far before the error occurrence is continuously outputted from the register D(12) for a predetermined period. The image data time series once accumulated to the buffer memory 25 can be usefully utilized by performing such processing. Further, the time difference between the image data time series after the error restoration and the image data time series before the error occurrence can be held at its minimum.

Thereafter, as shown by a thick line in Fig. 7, similar to a case during the generation of the receiving error in the order of D(2), D(3), D(4), D(5), D(6), D(7) and D(8), the control circuit 22 sequentially outputs the switching instructions of the selecting tap position to the tap selecting circuit 26. The period of the static image output in each tap position in this case is gradually shortened in the order of [portion D; two fields], [portion E; two fields], [portion F; one field], and [portion G; one field] respectively of the curve shown in Fig. 7. This corresponds to reverse motion damper processing (hereinafter simply called "recovery processing") in a receiving error restoring period. Namely, the period of the static image output inserted during the dynamic image output is gradually shortened by performing such recovery processing so that the perfect dynamic image output is finally performed from the tap D(8). Thus, the visual unnatural impression given to the user as a viewer becomes very small at the restoring time of the receiving error.

When the recovery processing is executed some times and the tap selecting position in the tap selecting circuit 26 is restored to D(8) of the middle point tap, the control circuit 22 terminates the recovery processing by resetting a post error flag.

Setting values such as the field number of the static image output in the recovery processing shown in Fig. 7, the field number of the dynamic image output as an interval, the tap selecting position or the selection switching number are merely one example. Accordingly, the execution of the present invention is naturally not limited to such an example. Namely, similar to the case of the motion damper processing, these setting values may be determined along an algorithm set so as to minimize the visual unnatural impression given to the user in conformity with the characteristics of the receiver also used in the recovery processing and the nature of the received image.

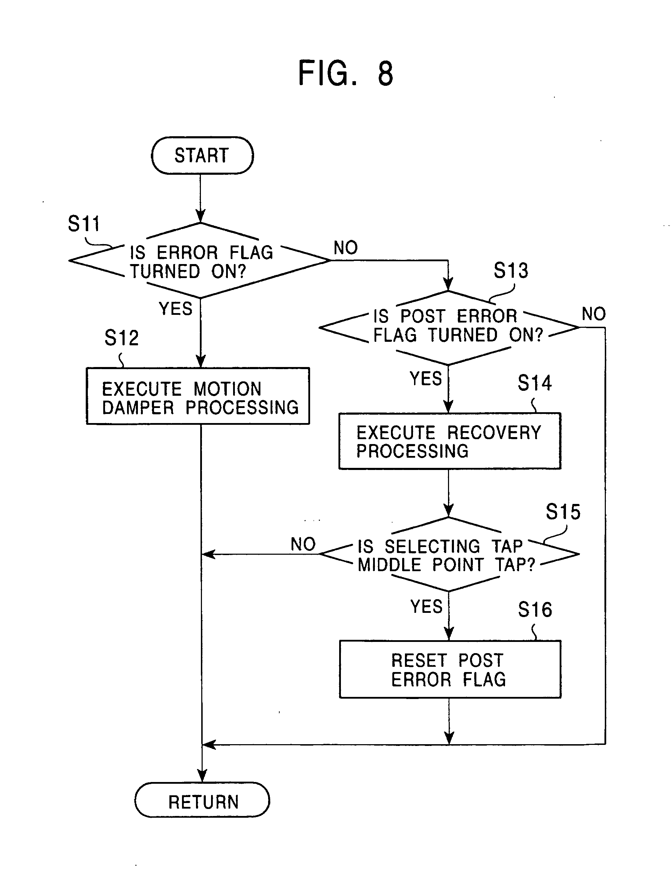

A processing subroutine program of the motion damper processing and the recover processing in the present invention will next be explained briefly with reference to the flow chart shown in Fig. 8.

Fig. 8 shows the processing subroutine program schematically showing the motion damper processing and the recovery processing. The tap selecting position in the tap selecting circuit 26 is switched in synchronization with the data shift in the buffer memory 25. Therefore, this subroutine may be started by a data shift clock.

When this subroutine is started, a microcomputer (hereinafter simply called "iCPU") within the control circuit 22 first checks whether an error flag is set or not in a step 11. The error flag shows a flag register on software set by the error occurrence signal and reset by extinction of this signal.

When the error flag is turned on, this shows a generating state of the receiving error. Therefore, the iCPU terminates this subroutine by executing the above motioned damper processing in a step 12.

In contrast to this, when the error flag is turned off in the step 11, the iCPU checks whether the above post error flag is set or not in the next step 13. When the post error flag is turned on, it proceeds to a step 14 and the above recovery processing is executed. In contrast to this, when the post error flag is turned off, the iCPU terminates this subroutine without performing any processing.

On the other hand, when the recovery processing of the step 14 is terminated, it proceeds to a step 15 and the iCPU next checks whether the tap position selected by the tap selecting circuit 26 at that time point shows the middle point tap (D(8)) or not. If the tap position shows the middle point tap, the post error flag is reset. In contrast to this, if no tap position shows the middle point tap, the iCPU terminates this subroutine without performing any processing.

As mentioned above in detail, in accordance with the present invention, it is possible to provide an image receiver in which the visual unnatural impression given to a user is small even when the image data is missed by receiving error.

## Claims

1. An image data processing circuit in a receiver comprising:
an image data memory;
a data writing means for sequentially writing received image data to said image data memory;
a data reading means for reading said image data from said memory on the basis of a reading address; and
an error occurrence signal generating means for generating an error occurrence signal for a predetermined period by detecting a receiving error;
wherein said data reading means selectively executes a static image reading mode for reading the image data while said reading address is fixed for a short time within a generating period of said error occurrence signal, and a dynamic image reading mode for reading the image data while said reading address is sequentially changed in a writing order of said image data.

2. An image data processing circuit according to claim 1, wherein said image data memory is constituted by a plurality of cascade-connected frame memories, and holds frame data within said image data while the frame data is sequentially shifted from the forefront order of said frame memory to the rearmost order; and
said data reading means makes said reading address correspond to each of said frame memories.

3. An image data processing circuit according to claim 1, wherein said data reading means alternately executes said static image reading mode and said dynamic image reading mode within the generating period of said error occurrence signal.

4. An image data processing circuit according to claim 1, wherein said data reading means fixes or changes an executing period of each of said static image reading mode and said dynamic image reading mode within the generating period of said error occurrence signal.

5. An image data processing circuit according to claim 1, wherein said data reading means executes said dynamic image reading mode by using frame data held in the central order of said frame memory in a stationary state.

6. An image data processing circuit according to claim 5, wherein said data reading means sequentially shifts the reading position of the frame data used in said static image reading mode or said dynamic image reading mode from the central order of said frame memory to the rearmost order while the receiving error is really caused within the generating period of said error occurrence signal.

7. An image data processing circuit according to claim 5, wherein, when the receiving error is restored within the generating period of said error occurrence signal, said data reading means moves the reading position of data from said frame memory onto the frame memory holding first frame data after the restoration of the receiving error at a time point at which said executed static image reading mode or said dynamic image reading mode is terminated.

8. An image data processing circuit according to claim 5, wherein, while the receiving error is restored to the stationary state within the generating period of said error occurrence signal, said data reading means sequentially shifts the reading position of the frame data used in said static image reading mode or said dynamic image reading mode from the frame memory holding first frame data after the restoration of said receiving error to the central order of said frame memory.
